# EUROPEAN PATENT SPECIFICATION

(11) **EP 3 208 500 B1**
(45) Date of publication and mention of the grant of the patent: **18.09.2019**
(21) Application number: 17156806.6
(22) Date of filing: 20.02.2017
(51) Int. Cl.: F16J 15/3208

(54) **SEALING STRUCTURE**
DICHTUNGSSTRUKTUR
STRUCTURE D'ÉTANCHÉITÉ

(30) Priority: 22.02.2016 JP 2016031106
(43) Date of publication of application: 23.08.2017
(73) Proprietor: Carl Freudenberg KG, 69469 Weinheim (DE)
(72) Inventor: Masatoshi, Seki, Ibaraki, 319-1535 (JP)

(56) References cited:
- EP-A1- 0 316 750

## Description

The present invention relates to a sealing structure for sealing an annular gap between a shaft and a shaft hole of a housing.

A sealing for such purpose is disclosed in EP 0 316 750 A1. This sealing structure comprises a first sealing ring and a second sealing ring, wherein the first sealing ring forces the second sealing ring with its sealing edge against a surface. Pressure of the sealing edge against the surface is thereby increased and sealability of the sealing structure.

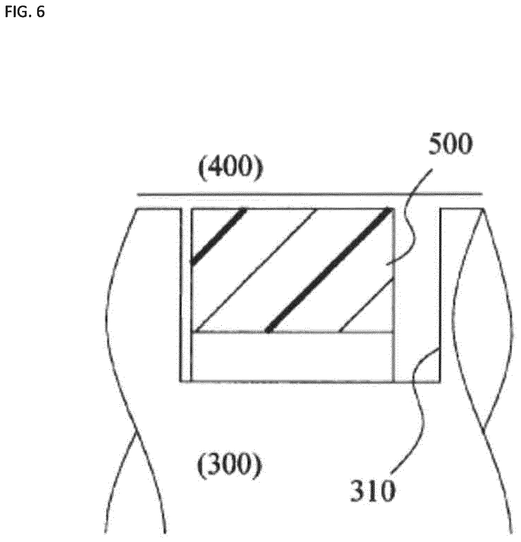

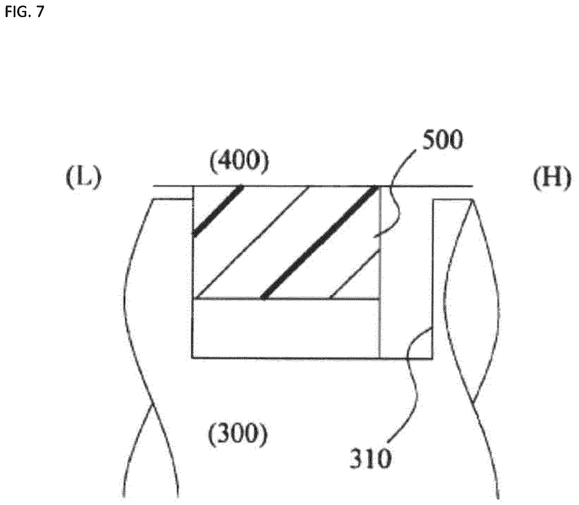

In an automatic transmission (AT) or continuously variable transmission (CVT) for automobiles, a sealing device (sealing ring) for sealing an annular gap between a shaft and a housing that rotate relatively is provided to maintain the hydraulic pressure. A sealing ring according to a conventional example is described with reference to FIGS. 6 and 7. FIG. 6 is a schematic cross-sectional view illustrating a state where the hydraulic pressure is not maintained with the sealing ring according to the conventional example. FIG. 7 is a schematic cross-sectional view illustrating a state where the hydraulic pressure is maintained with the sealing ring according to the conventional example. A sealing ring 500 according to the conventional example is configured such that the sealing ring 500 is attached to an annular groove 310 provided on an outer circumference of a shaft 300 and slidably contacts both an inner circumferential surface of a shaft hole of a housing 400 through which the shaft 300 is inserted and a sidewall surface of the annular groove 310 so as to seal an annular gap between the shaft 300 and the shaft hole of the housing 400.

The sealing ring 500 used for the aforementioned intended purpose requires a sufficiently reduced sliding torque. Therefore, the circumferential length of the outer circumferential surface of the sealing ring 500 is configured to be shorter than the circumferential length of the inner circumferential surface of the shaft hole of the housing 400, and is configured not to include a tightening margin. Accordingly, in a state where an engine of an automobile is started and the hydraulic pressure is increased, the sealing ring 500 is increased in diameter by the hydraulic pressure and is closely attached to the inner circumferential surface of the shaft hole and the sidewall surface of the annular groove 310, thus fulfilling a function of sufficiently maintaining the hydraulic pressure (see FIG. 7). In a state where the hydraulic pressure is not applied due to stoppage of the engine, the sealing ring 500 is configured to be brought into a state where the sealing ring 500 is separate from the inner circumferential surface of the shaft hole or the sidewall surface of the annular groove 310 (see FIG. 6).

The sealing ring 500 often includes a joint portion at a single location in a circumferential direction in order to increase an attachment property to the annular groove 310. As a structure of the joint portion, a special step cut that provides stable sealability even in the case of thermal expansion or contraction is known (see Patent Literature 1). However, even the special step cut cannot positively prevent leakage of sealing target fluid, and a further increase in sealability is needed.

In addition, in the case of the sealing ring 500 configured in the aforementioned manner, the sealing function is not fulfilled in a state where the hydraulic pressure is not applied. Therefore, with a configuration in which speed change is controlled by an oil pumped by a hydraulic pump, e.g., an AT or CVT, in a no-load state (e.g., during idle reduction) where the hydraulic pump is stopped, the oil that has been sealed by the sealing ring 500 is unsealed and returns to the oil pan, thus resulting in a loss of oil from the vicinity of the sealing ring 500. Accordingly, when the engine is started (restarted) in the aforementioned state, the operation begins in an unlubricated state where oil is not present in the vicinity of the sealing ring 500, and the responsiveness or operability can be reduced. Therefore, there is room for improvement.

Patent Literature 1: JP Pat. Appl. Publ. No. 2002-372154

### Summary of Invention

It is an object of the present invention to provide a sealing structure capable of increasing the sealability and fulfilling a sealing function even in a low fluid pressure state.

### [Solution to Problem]

The present invention employs the following means to solve the aforementioned problem.

Specifically, a sealing structure of the present invention includes:
a shaft and a housing that rotate relatively, and
a sealing device attached to an annular groove provided on an outer circumference of the shaft, the sealing device being configured to seal an annular gap between the shaft and the housing and to maintain a fluid pressure of a sealing target region configured such that the fluid pressure varies,
wherein
the sealing device includes:
   a first sealing ring having an endless shape and made of a resin, the first sealing ring being closely attached to a sidewall surface on a high-pressure side and a groove bottom surface of the annular groove, the first sealing ring being configured to slide with respect to an inner circumferential surface of a shaft hole of the housing through which the shaft is inserted, and
   a second sealing ring made of a rubbery elastic body, the second sealing ring being closely attached to a sidewall surface on a low-pressure side and the groove bottom surface of the annular groove, as well as to the first sealing ring,
   the first sealing ring includes a first annular portion that extends to a radially inner side and to a high-pressure side from a radially widthwise middle, and a second annular portion that extends to a radially outer side and to the high-pressure side from the radially widthwise middle,
   a first end portion of the first annular portion situated at the radially inner side and a low-pressure side is closely attached to the groove bottom surface of the annular groove, a second end portion of the first annular portion situated at the radially inner side and the high-pressure side is closely attached to the sidewall surface on the high-pressure side of the annular groove, and a third end portion of the second annular portion situated at the radially outer side and the low-pressure side is configured to slide with respect to the inner circumferential surface of the shaft hole, and
   the second sealing ring is arranged to press the first annular portion toward the high-pressure side and toward the radially outer side.

According to the present invention, the first sealing ring made of a resin has an endless shape. Therefore, unlike the case of a resin sealing ring having a joint portion, the problem of leakage of a sealing target fluid through a joint portion does not occur. Furthermore, the second sealing ring is arranged to press the first annular portion toward the high-pressure side and toward the radially outer side. Accordingly, the first sealing ring is generally pressed to the high-pressure side and a radially outer side. Thus, even in a state where no fluid pressure is exerted (no pressure difference is generated) or almost no fluid pressure is exerted (almost no pressure difference is generated), the first sealing ring can be brought into a state where the first sealing ring is in contact with both the sidewall surface of the annular groove on the high-pressure side and the inner circumferential surface of the shaft hole of the housing. Accordingly, since the sealing function is fulfilled, the fluid pressure can be maintained from immediately after the beginning of an increase in fluid pressure of the sealing target region.

As described heretofore, the present invention is capable of increasing the sealability and fulfilling the sealing function even in a low fluid pressure state.
FIG. 1 is a side view of a first sealing ring according to an embodiment of the present invention.
FIG. 2 is a schematic cross-sectional view of the first sealing ring according to the embodiment of the present invention.
FIG. 3 is a side view of a second sealing ring according to the embodiment of the present invention
FIG. 4 is a schematic cross-sectional view illustrating a state where a sealing structure according to the embodiment of the present invention is in use.
FIG. 5 is a schematic cross-sectional view illustrating a state where a sealing structure according to the embodiment of the present invention is in use.
FIG. 6 is a schematic cross-sectional view illustrating a state where a sealing device (sealing ring) according to a conventional example is in use.
FIG. 7 is a schematic cross-sectional view illustrating a state where the sealing device (sealing ring) according to the conventional example is in use.

A mode of carrying out the present invention is exemplarily described in detail below on the basis of an embodiment with reference to the drawings. However, dimensions, materials, shapes and relative arrangements of components described in the example are not for the purpose of limiting the scope of the present invention thereto unless otherwise specified. A sealing structure according to the present embodiment is used for sealing an annular gap between a shaft and a housing that rotate relatively, in order to maintain the hydraulic pressure in a transmission, e.g., an AT and a CVT, for automobiles. In addition, in the following description, a "high-pressure side" means a side that is subject to a high pressure when a pressure difference is generated between both sides of the sealing device, and a "low-pressure side" means a side that is subject to a low pressure when a pressure difference is generated between both sides of the sealing device.

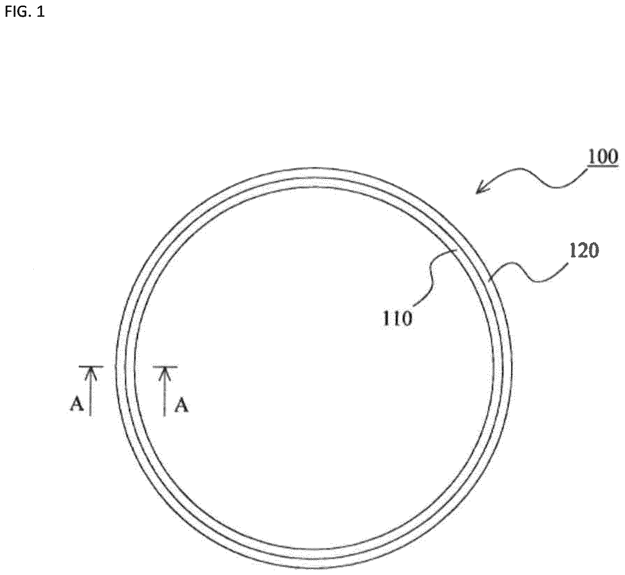

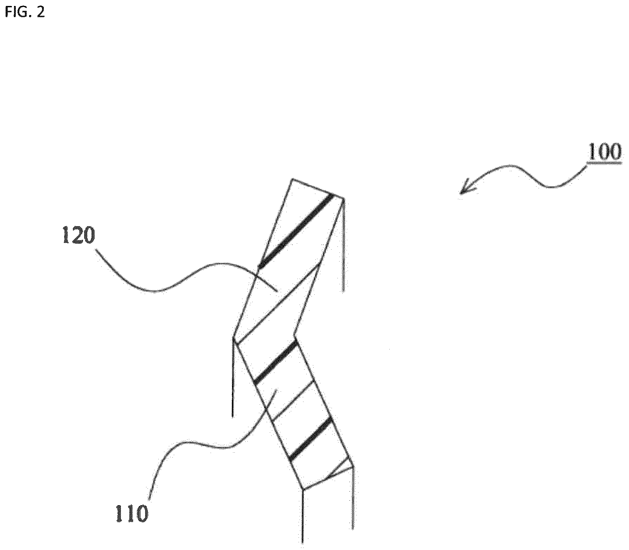

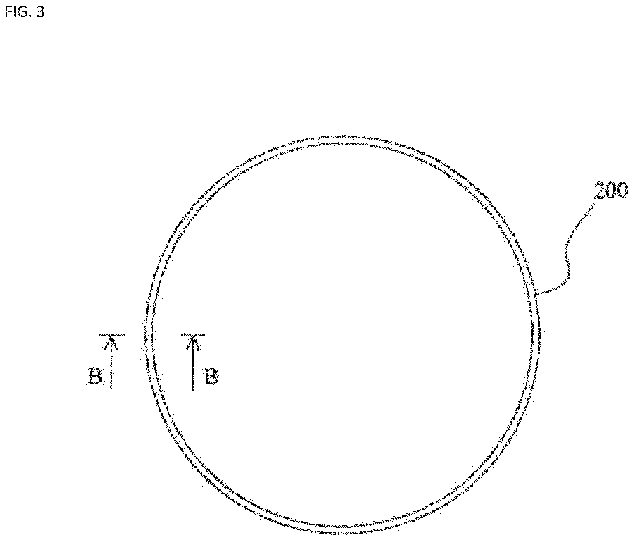

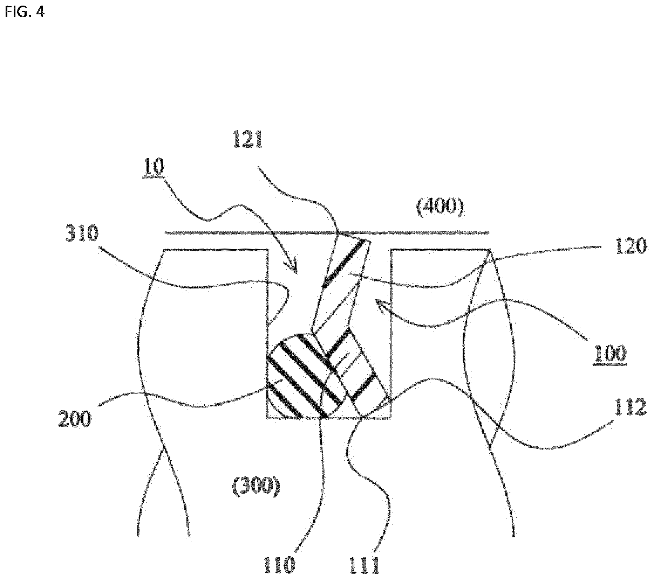

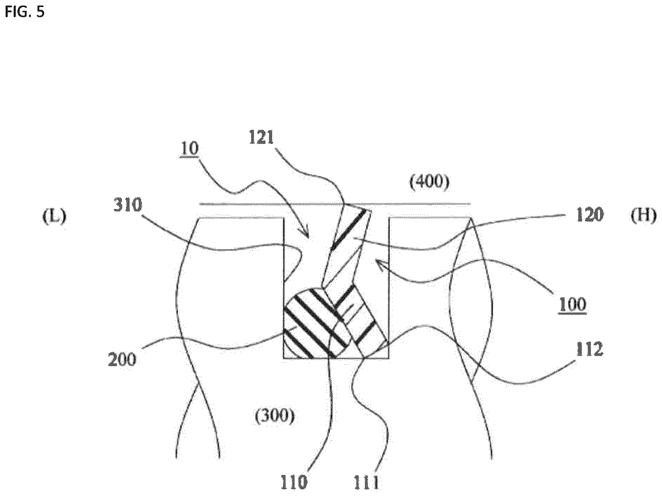

A sealing structure according to an embodiment of the present invention is described with reference to FIGS. 1 to 3. FIG. 1 is a side view of a first sealing ring according to the example of the present invention. FIG. 2 is a schematic cross-sectional view of the first sealing ring according to the embodiment of the present invention. FIG. 2 is a cross-sectional view taken along line A-A of FIG. 1. FIG. 3 is a side view of a second sealing ring according to the example of the present invention. FIGS. 4 and 5 are schematic cross-sectional views illustrating a state where the sealing structure according to the example of the present invention is in use. The first sealing ring in FIGS. 4 and 5 corresponds to the cross-sectional view taken along line A-A of FIG. 1, and the second sealing ring corresponds to a cross-sectional view taken along line B-B of FIG. 3.

Configurations of the sealing structure according to the embodiment of the present invention are described. The sealing structure according to the present embodiment includes a shaft 300 and a housing 400 that rotate relatively, as well as a sealing device 10 configured to seal an annular gap between the shaft 300 and the housing 400 (an inner circumferential surface of a shaft hole of the housing 400 through which the shaft 300 is inserted). The sealing device 10 according to the present embodiment is attached to an annular groove 310 provided on an outer circumference of the shaft 300 and is configured to seal an annular gap between the shaft 300 and the housing 400 that rotate relatively. Thus, the sealing device 10 maintains the fluid pressure of a sealing target region which is configured such that the fluid pressure (hydraulic pressure in the present embodiment) varies. In the present embodiment, the fluid pressure in the right-hand region in FIGS. 4 and 5 is configured to vary, and the sealing device 10 plays a role in maintaining the fluid pressure of the sealing target region on the right-hand side in the drawing. In a state where the engine of an automotive engine is stopped, the fluid pressure of the sealing target region is low, resulting in a no-load state. When the engine is started, the fluid pressure of the sealing target region increases.

Furthermore, the sealing device 10 according to the present embodiment includes a first sealing ring 100 having an endless shape and made of resin and a second sealing ring 200 made of a rubbery elastic body. Examples of the material of the first sealing ring 100 include polytetrafluoroethylene (PTFE), polyetheretherketone (PEEK), and polyphenylenesulfide (PPS). In addition, examples of the material of the second sealing ring 200 include acrylic rubber (ACM), fluororubber (FKM), hydrogenated nitrile rubber (HNBR), nitrile rubber (NBR), ethylenepropylene rubber (EPDM), silicone rubber (VMQ), fluorosilicone rubber (FVMQ), chloroprene rubber (CR), butyl rubber (IIR), styrene-butadiene rubber (SBR), and urethane rubber (AU).

The first sealing ring 100 includes a first annular portion 110 that extends to a radially inner side and to a high-pressure side (H) from the radially widthwise middle, and a second annular portion 120 that extends to a radially outer side and to the high-pressure side (H) from the radially widthwise middle. In addition, in a state where no external force is exerted, with regard to the outside diameter of the first sealing ring 100, the outside diameter of the largest portion (an end 121 of the second annular portion 120 situated at the radially outer side and the low-pressure side) is designed to be greater than the inside diameter of the shaft hole of the housing 400. The surface of the first annular portion 110 on the high-pressure side (H) and the surface of the first annular portion 110 on the low-pressure side (L) both tapered surfaces. In addition, the surface of the second annular portion 120 on the high-pressure side (H) and the surface of the second annular portion 120 on the low-pressure side (L) are both tapered surfaces.

Furthermore, regarding the first sealing ring 100, a first end portion 111 of the first annular portion 110 situated at a radially inner side and the low-pressure side (L) is closely attached to the groove bottom surface of the annular groove 310, and a second end portion 112 of the first annular portion 110 situated at a radially inner side and the high-pressure side (H) is closely attached to a sidewall surface on the high-pressure side (H) of the annular groove 310. In addition, a third end portion 121 of the second annular portion 120 of the first sealing ring 100 situated at a radially outer side and the low-pressure side (L) slides with respect to the inner circumferential surface of the shaft hole of the housing 400.

In addition, the second sealing ring 200 according to the present embodiment is an O-ring having a circular shape in cross-section. Furthermore, the second sealing ring 200 is closely attached to a sidewall surface on the low-pressure side (L) and the groove bottom surface of the annular groove 310, as well as to the tapered surface of the first annular portion 110 of the first sealing ring 100 on the low-pressure side (L). Thus, the first annular portion 110 of the first sealing ring 100 is pressed toward the high-pressure side (H) and toward the radially outer side by the second sealing ring 200. The second sealing ring 200 is not limited to an O-ring, but other rubber sealing rings are also applicable. For example, a D-ring having a D shape in cross-section, an oval ring having an oval shape in cross-section, and an X-ring having an X shape in cross-section are applicable.

The mechanism of the sealing device 10 in use according to the present embodiment is described particularly with reference to FIGS. 4 and 5. FIG. 4 illustrates a state where an engine is stopped and there is no pressure difference between the fluid pressure in the left-hand region and the fluid pressure in the right-hand region across the sealing device 10. FIG. 5 illustrates a state where an engine is started and the fluid pressure in the right-hand region is greater than that in the left-hand region across the sealing device 10.

As described above, the first annular portion 110 of the first sealing ring 100 is pressed to the high-pressure side (H) and the radially outer side by the second sealing ring 200. Thus, the first sealing ring 100 is generally pressed toward the high-pressure side (H) and toward the radially outer side by the second sealing ring 200. Accordingly, the first sealing ring 100 is kept in contact with the sidewall surface of the annular groove 310 on the high-pressure side (H) and the inner circumferential surface of the shaft hole of the housing 400.

With the sealing device 10 configured in the aforementioned manner, a state where the annular gap between the shaft 300 and the housing 400 is sealed is maintained even in a state where the engine is stopped and there is no pressure difference between both sides across the sealing device 10 (no-load state) (see FIG. 4). Furthermore, even in a state where the engine is started and the fluid pressure in the right-hand region is greater than that in the left-hand region across the sealing device 10, there is almost no change in arrangements of the first sealing ring 100 and the second sealing ring 200. Accordingly, the annular gap between the shaft 300 and the housing 400 is maintained in a sealed state. In addition, during relative rotation of the shaft 300 and the housing 400, the first sealing ring 100 is kept in a closely attached state to the side surface and the groove bottom surface of the annular groove 310 on the high-pressure side (H), and there is a sliding between the first sealing ring 100 and the inner circumferential surface of the shaft hole of the housing 400.

In the sealing device 10 according to the present embodiment, the first sealing ring 100 made of resin has an endless shape. Therefore, unlike the case of a resin sealing ring having a joint portion, the problem of leakage of a sealing target fluid through a joint portion does not occur. Furthermore, the second sealing ring is arranged to press the first annular portion 110 to the high-pressure side (H) and to the radially outer side. Accordingly, the first sealing ring 100 is generally pressed to the high-pressure side (H) and to the radially outer side. Thus, even in a state where no fluid pressure is exerted (no pressure difference is generated) or almost no fluid pressure is exerted (almost no pressure difference is generated), the first sealing ring 100 can be brought into a state where the first sealing ring 100 is in contact with both the sidewall surface of the annular groove 310 on the high-pressure side (L) and the inner circumferential surface of the shaft hole of the housing 400. Accordingly, since the sealing function is fulfilled, the fluid pressure can be maintained from immediately after the beginning of an increase in fluid pressure of the sealing target region.

Specifically, in the case of an engine with an idle reduction function, by pressing an accelerator pedal to start the engine from an engine stop state, the hydraulic pressure can be maintained from immediately after the beginning of an increase in hydraulic pressure on the sealing target region side. Generally, a resin sealing ring hardly fulfills the function of suppressing fluid leakage. However, the sealing device 10 according to the present embodiment maintains the annular gap between the shaft 300 and the housing 400 in a sealed state even in a no-load state. Therefore, the function of sufficiently suppressing fluid leakage is fulfilled. Therefore, even after the operation, e.g., of the pump, is stopped by the stoppage of the engine, the state where a pressure difference is generated can be maintained for some time. Accordingly, in the case of an engine with an idle reduction function, when an engine stop state is brief, a state where a pressure difference is generated can be maintained. Therefore, when the engine is restarted, the fluid pressure can be suitably maintained from immediately thereafter.

## Claims

1. A sealing structure comprising a shaft (300) and a housing (400) that rotate relatively; and a sealing device (10) attached to an annular groove (310) provided on an outer circumference of the shaft (300), the sealing device (10) being configured to seal an annular gap between the shaft (300) and the housing (400) and to maintain a fluid pressure of a sealing target region configured such that the fluid pressure varies, **wherein** the sealing device (10) includes a first sealing ring (100) having an endless shape and a second sealing ring (200) **characterized in that** the first sealing ring (100) is made of a resin, the first sealing ring (100) being closely attached to a sidewall surface on a high-pressure side (H) and a groove bottom surface of the annular groove, the first sealing ring (100) being configured to slide with respect to an inner circumferential surface of a shaft hole of the housing (400) through which the shaft (300) is inserted, and that a second sealing ring (200) is made of a rubbery elastic body, the second sealing ring (200) being closely attached to a sidewall surface on a low-pressure side (L) and the groove bottom surface of the annular groove, as well as to the first sealing ring (100), the first sealing ring (100) includes a first annular portion (110) that extends to a radially inner side and to a high-pressure side (H) from a radially widthwise middle, and a second annular portion (120) that extends to a radially outer side and to the high-pressure side (H) from the radially widthwise middle, and a first end portion (111) of the first annular portion (110) situated at the radially inner side and a low-pressure side (L) is closely attached to the groove bottom surface of the annular groove (310), a second end portion (112) of the first annular portion (110) situated at the radially inner side and the high-pressure side (H) is closely attached to the sidewall surface on the high-pressure side (H) of the annular groove (310), and a third end portion (121) of the second annular portion (120) situated at the radially outer side and the low-pressure side (L) is configured to slide with respect to the inner circumferential surface of the shaft hole, and the second sealing ring (200) is arranged to press the first annular portion (110) toward the high-pressure side (H) and toward the radially outer side.

## Patentansprüche

1. Dichtungsstruktur, umfassend eine Welle (300) und ein Gehäuse (400), die sich relativ drehen, und eine Dichtungsvorrichtung (10), die an einer ringförmigen Nut (310) angebracht ist, die an einem äußeren Umfang der Welle (300) vorgesehen ist, wobei die Dichtungsvorrichtung (10) dazu ausgestaltet ist, einen ringförmigen Spalt zwischen der Welle (300) und dem Gehäuse (400) abzudichten und einen Fluiddruck eines Dichtungszielbereichs aufrechtzuerhalten, der so ausgestaltet ist, dass der Fluiddruck variiert, wobei die Dichtungsvorrichtung (10) einen ersten Dichtungsring (100) mit einer Endlosform und eine zweiten Dichtungsring (200) aufweist, **dadurch gekennzeichnet, dass** der erste Dichtungsring (100) aus einem Harz hergestellt ist, wobei der erste Dichtungsring (100) eng an einer Seitenwandfläche auf einer Hochdruckseite (H) und einer Nutbodenfläche der ringförmigen Nut angebracht ist, wobei der erste Dichtungsring (100) dazu ausgestaltet ist, bezüglich einer inneren Umfangsfläche eines Wellenlochs des Gehäuses (400) zu gleiten, durch das die Welle (300) eingeführt ist, und dass ein zweiter Dichtungsring (200) aus einem gummielastischen Körper hergestellt ist, wobei der zweite Dichtungsring (200) eng an einer Seitenwandfläche auf einer Niederdruckseite (L) und einer Nutbodenfläche der ringförmigen Nut sowie an dem ersten Dichtungsring (100) angebracht ist, der erste Dichtungsring (100) einen ersten ringförmigen Abschnitt (110), der sich zu einer radial inneren Seite und zu einer Hochdruckseite (H) von einer radial breitenmäßigen Mitte erstreckt, und einen zweiten ringförmigen Abschnitt (120), der sich zu einer radial äußeren Seite und zu der Hochdruckseite (H) von der radial breitenmäßigen Mitte erstreckt, aufweist, und ein erster Endabschnitt (111) des ersten ringförmigen Abschnitts (110), der an der radial inneren Seite und einer Niederdruckseite (L) angeordnet ist, eng an der Nutbodenfläche der ringförmigen Nut (310) angebracht ist, ein zweiter Endabschnitt (112) des ersten ringförmigen Abschnitts (110), der an der radial inneren Seite und der Hochdruckseite (H) angeordnet ist, eng an der Seitenwandfläche an der Hochdruckseite (H) der ringförmigen Nut (310) angebracht ist, und ein dritter Endabschnitt (121) des zweiten ringförmigen Abschnitts (120), der an der radial äußeren Seiten und der Niederdruckseite (L) angeordnet ist, dazu ausgestaltet ist, bezüglich der inneren Umfangsfläche des Wellenlochs zu gleiten, und der zweite Dichtungsring (200) so angeordnet ist, dass er den ersten ringförmigen Abschnitt (110) zu der Hochdruckseite (H) und zu der radial äußeren Seite hin drückt.

## Revendications

1. Structure d'étanchéité comprenant un arbre (300) et un boîtier (400) qui tournent l'un par rapport à l'autre ; et un dispositif d'étanchéité (10) attaché à une gorge annulaire (310) prévue sur une circonférence extérieure de l'arbre (300), le dispositif d'étanchéité (10) étant configuré pour sceller un espace annulaire entre l'arbre (300) et le boîtier (400) et pour maintenir une pression fluidique d'une région cible d'étanchéité configurée de telle sorte que la pression de fluide varie, le dispositif d'étanchéité (10) comportant une première bague d'étanchéité (100) ayant une forme sans fin et une deuxième bague d'étanchéité (200), **caractérisée en ce que** la première bague d'étanchéité (100) est fabriquée en résine, la première bague d'étanchéité (100) étant attachée étroitement à une surface de paroi latérale sur un côté haute pression (H) et à une surface inférieure de gorge de la gorge annulaire, la première bague d'étanchéité (100) étant configurée pour coulisser par rapport à une surface circonférentielle intérieure d'un trou d'arbre du boîtier (400) à travers lequel est inséré l'arbre (300), et **en ce qu'**une deuxième bague d'étanchéité (200) est fabriquée en un corps élastique caoutchouteux, la deuxième bague d'étanchéité (200) étant attachée étroitement à une surface de paroi latérale sur un côté basse pression (L) et à la surface inférieure de gorge de la gorge annulaire, ainsi qu'à la première bague d'étanchéité (100), la première bague d'étanchéité (100) comporte une première partie annulaire (110) qui s'étend vers un côté radialement intérieur et vers un côté haute pression (H) depuis une partie centrale radialement dans le sens de la largeur, et une deuxième partie annulaire (120) qui s'étend vers un côté radialement extérieur et vers le côté haute pression (H) depuis la partie centrale radialement dans le sens de la largeur, et une première partie d'extrémité (111) de la première partie annulaire (110) située au niveau du côté radialement intérieur et d'un côté basse pression (L) est attachée étroitement à la surface inférieure de gorge de la gorge annulaire (310), une deuxième partie d'extrémité (112) de la première partie annulaire (110) située au niveau du côté radialement intérieur et du côté haute pression (H) est attachée étroitement à la surface de paroi latérale du côté haute pression (H) de la gorge annulaire (310), et une troisième partie d'extrémité (121) de la deuxième partie annulaire (120) située au niveau du côté radialement extérieur et du côté basse pression (L) est configurée pour coulisser par rapport à la surface circonférentielle intérieure du trou d'arbre, et la deuxième bague d'étanchéité (200) est prévue pour presser la première partie annulaire (110) vers le côté haute pression (H) et vers le côté radialement extérieur.
